(19) Europäisches Patentamt
European Patent Office
Office européen des brevets

(11) EP 0 755 779 B1

# (12) EUROPÄISCHE PATENTSCHRIFT

(45) Veröffentlichungstag und Bekanntmachung des Hinweises auf die Patenterteilung:
**09.08.2000 Patentblatt 2000/32**

(51) Int Cl.⁷: **B32B 27/32**

(21) Anmeldenummer: **96108223.7**

(22) Anmeldetag: **23.05.1996**

## (54) Biaxial orientierte Polypropylenfolie mit erhöhter Dimensionsstabilität

Biaxially oriented polypropylene film with improved dimensional stability

Film de polypropylène orienté biaxialement ayant une stabilité dimensionnelle améliorée

(84) Benannte Vertragsstaaten:
**AT BE DE ES FR GB IT NL**

(30) Priorität: **31.05.1995 DE 19519260**
**27.12.1995 DE 19548795**

(43) Veröffentlichungstag der Anmeldung:
**29.01.1997 Patentblatt 1997/05**

(73) Patentinhaber: **HOECHST AKTIENGESELLSCHAFT**
**65929 Frankfurt am Main (DE)**

(72) Erfinder:
- **Peiffer, Herbert, Dr.**
**55126 Mainz (DE)**
- **Busch, Detlef, Dl.**
**66740 Saarlouis (DE)**
- **Schlögl, Gunter, Dr.**
**65779 Kelkheim (DE)**
- **Kochem, Karl-Heinz, Dr.**
**66385 St. Ingbert (DE)**
- **Dries, Thomas, Dr.**
**55270 Schwabenheim (DE)**
- **Winter, Andreas, Dr.**
**61479 Glashütten (DE)**

(74) Vertreter: **Luderschmidt, Schüler & Partner GbR**
**Patentanwälte,**
**Postfach 3929**
**65029 Wiesbaden (DE)**

(56) Entgegenhaltungen:
**EP-A- 0 282 917**
**EP-A- 0 384 263**
**EP-A- 0 645 426**
**WO-A-95/30708**
**DE-A- 4 228 812**
**DE-A- 4 242 486**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine biaxial orientierte, mindestens einschichtige Polypropylenfolie mit hoher Dimensionsstabilität in der Wärme, ein Verfahren zu ihrer Herstellung und ihre Verwendung.

Biaxial orientierte Polypropylenfolien sind bekannt. Die Folien sind in der Regel mehrschichtige Filme, die nach dem sogenannten Stenterverfahren über Koextrusion hergestellt werden.

Bei diesem Verfahren werden die Polymeren in Extrudern aufgeschmolzen und homogenisiert. Die Schmelzen werden filtriert, in einer Breitschlitzdüse zusammengeführt und dort zu dem mehrschichtigen Schmelzefilm ausgeformt. Der Schmelzefilm wird auf eine Kühlwalze gegossen, wobei er sich zu einer unorientierten Folie verfestigt.

Daran anschließend wird die Folie durch Strecken in Längs- und in Querrichtung biaxial orientiert. Nach der Querstreckung wird die Folie auf Raumtemperatur abgekühlt, an den beiden Rändern gesäumt, das Dickenprofil gemessen und gegebenenfalls oberflächenbehandelt. Abschließend wird die Folie aufgewickelt und zur kundenfertigen Schnittrolle konfektioniert.

Die anwendungsrelevanten Eigenschaften der boPP-Folien werden hauptsächlich durch die biaxiale Orientierung bestimmt. BoPP-Folien haben hohe mechanische Festigkeiten, eine gute Dimensionsstabilität in der Wärme, eine brilliante Optik und eine ausgezeichnete Planlage infolge eines hervorragenden Dickenprofils.

Aufgrund dieser guten Eigenschaften und einer ausgezeichneten Verarbeitbarkeit gelangen boPP-Folien in vielfältige Anwendungen. Wichtigstes Marktsegment ist die Verpackung, in die ca. 70 % der produzierten Menge fließt. Daneben gelangen boPP-Folien in technische Anwendungen. Hervorzuheben sind die Metallisierung, die Kaschierung und die Verwendung der Folie als Elektroisolation/Dielektrikum) bei der Kondensatorherstellung.

Bei technischen Anwendungen, zum Beispiel bei der Metallisierung oder bei der Verwendung der Folie bei der Kondensatorherstellung, ist es wünschenswert bzw. oftmals sogar erfoderlich, daß die Folien eine sehr hohe Dimensionsstabilität, insbesondere in der Wärme, aufweisen, d.h., daß der thermische Schrumpf der Folie, auch bei erhöhten Temperaturen sehr gering sein muß.

So treten beispielsweise bei der Metallisierung von Folien, z.B. Kondensatorfolien, durch die freiwerdende Wärmemenge (Wärmetönung) bei der Metallabscheidung höhere Temperaturen an der Folienoberfläche und damit auch im Innern der Folie auf. Die Zunahme der Temperatur im Innern der Folie ist - bei gleichbleibender Metallschicht - umso größer, je dünner die Folie ist. Der Trend bei dieser Anwendung geht hin zu immer dünneren Folien. Vor 10 Jahren betrug in dieser Anwendung die mittlere Foliendicke ca. 9 µm, heute liegt sie deutlich unterhalb von 7 µm.

Ein zu hoher Schrumpf der Folie infolge erhöhter Folientemperatur kann zu Problemen bei der Aufrollung der metallisierten Folie führen. Bei zu hohem Schrumpfvermögen der Folie bilden sich auf der Rolle Falten und/oder die Metallschicht wird beschädigt.

Ähnlich ist es bei der Weiterverarbeitung der metallisierten Folie zu Kondensatoren. Dies geschieht in der Regel dadurch, das Schmalschnitte der metallisierten Folie hergestellt werden und diese dann zu Rundwickeln weiterverarbeitet werden. Bei einigen Anwendungen werden diese Rundwickeln zu flachgepressten Kondensatoren weiterverarbeitet. In beiden Fällen wird üblicherweise an den Stirnkanten der Rund- bzw. der Flachwickeln eine elektrische Kontaktierung mittels Lötung oder Schoopierung (Aufspritzen oder Aufsprayen von geschmolzenen Metallen bei hohen Temperaturen) vorgenommen. Dabei können die Stirnseiten der Folienwickel erheblich höheren Temperaturen ausgesetzt werden. Nachteilig ist hierbei, daß es durch den Schrumpf der Folie in Längs- oder Querrichtung infolge dieser erhöhten Temperaturen zu Brüchen an der Kontaktierung und/oder zu partiellen Beschädigungen der Metallschicht auf der Folie kommen kann.

Ein zu hoher Schrumpf ist darüber hinaus nachteilig bei Kondensatoranwendungen, bei denen im Dauergebrauch und bei Spitzenbelastung erhöhte Temperaturen in der Umgebung oder im Kondensator selbst entstehen können.

Das Geschilderte macht es bei der Kondensatorherstellung wünschenswert, Folien mit einem möglichst geringen Folienschrumpf einsetzen zu können.

Im Verpackungsbereich, zum Beispiel beim Einschlag von Zigaretten, kann es ebenfalls wünschenswert sein, daß die Folie einen möglichst geringen thermischen Schrumpf aufweist. Bei der Verarbeitung von solchen Folien geht der Trend zu höheren Maschinengeschwindigkeiten und zu geringeren Foliendicken. Daneben besteht der Wunsch nach einem möglichst engen Einschlagsbild ohne Faltenbildung.

So betrug beim Einschlag von Zigarettenpäckchen 1980 die Taktgeschwindigkeit, mit der die Päckchen verarbeitet wurden, etwa 250 Stk/min, heute liegt sie bei ca. 500 Skt/min. Aus Kosten- und Umweltgründen wurde die Foliendicke von damals ca. 2o µm auf heute ca. 16 µm abgesenkt.

Bei hoher Maschinengeschwindigkeit muß die Temperatur der Siegelbacken deutlich erhöht werden, um zu einem festgeschlossenen aromadichten Einschlag der Zigarettenverpackung zu kommen, da die Siegelzeiten immer weiter verkürzt werden. Je dünner die Folie dabei ist, umso höher wird dabei die Folientemperatur.

Ein zu hoher Schrumpf der Folie führt insbesondere bei sogenannten Weichpackungen dazu, daß sich beim Einschlag Falten bilden, was unerwünscht ist. Außerdem kann ein zu hoher Folienschrumpf bewirken, daß die Packung

eingedrückt oder verbogen wird, was ebenfalls unerwünscht ist.

Bei bedruckter Standardverpackungsfolie ist ein geringer Schrumpf der Folie ebenfalls von Vorteil. Beim Bedrucken der Folie können dann z.B. höhere Trocknungstemperaturen und damit höhere Verarbeitungsgeschwindigkeiten angewendet werden.

Generell ist immer dann ein möglichst kleiner Schrumpf von Vorteil, wenn sich der Schrumpf bei thermischer Belastung der Folie negativ auswirkt.

Es ist bekannt, den Folienschrumpf durch geeignete Wahl der Strecktemperaturen, insbesondere derjenigen bei der Querstreckung, zu verringern. Dazu sind bei großer Verweilzeit der Folie im Querstreckrahmen die Strecktemperaturen und die Fixiertemperaturen möglichst hoch zu wählen. Nachteilig daran ist, daß damit die Transparenz und der Glanz der Folie negativ beeinflußt werden, was unerwünscht ist. Außerdem führen zu hohe Strecktemperaturen zu einem schlechten Dickenprofil und zu geringeren mechanischen Festigkeiten.

EP-A-0 645 426 betrifft eine biaxial orientierte Polypropylenfolie mit verbesserten Eigenschaften hinsichtlich Mechanik und Barriere, ein Verfahren zu ihrer Herstellung und ihre Verwendung.

Die Aufgabe der vorliegenden Erfindung bestand darin, eine biaxial orientierte Polypropylenfolie zur Verfügung zu stellen, die sich durch eine hohe Dimensionsstabilität in der Wärme, d.h. durch einen sehr geringen Schrumpf auszeichnet. Die Schrumpfwerte sollen in beiden Richtungen, d.h., in Maschinenrichtung und in Querrichtung möglichst gering sein. Dabei sollen die anderen vorteilhaften Eigenschaften der Polypropylenfolie, wie hoher Glanz, geringe Trübung, gleichmäßiges Dickenprofil etc. die im Hinblick auf ihre Verwendung als Verpackungsfolie gefordert sind nicht beeinträchtigt werden. Die Nachteile, wie schlechteres Dickenprofil oder geringere Wirtschaftlichkeit durch vermehrte Folienabrisse durch eine gesonderte Prozeßführung sollen vermieden werden.

Diese Aufgabe wird erfindungsgemäß durch eine biaxial orientierte Polypropylenfolie mit mindestens einer Basisschicht welche Polypropylen enthält gelöst, wobei in der Basisschicht ein Polypropylen eingesetzt wird dessen kennzeichnende Merkmale darin bestehen, daß

- die mittlere isotaktische Blocklänge des Polypropylenmoleküls zwischen zwei Kettenbaufehlern im statistischen Mittel größer 40 ist
- der n-heptanunlösliche Anteil des Polypropylens einen Kettenisotaxie-Index, gemessen mittels $^{13}C$-NMR-Spektroskopie, von mindestens 95 % aufweist,
- das Verhältnis von Gewichtsmittel $M_w$ zu Zahlenmittel $M_n$ der Molekulargewichtsverteilung kleiner als 4 ist
- der n-heptanlösliche Anteil des Polypropylens kleiner als 1% ist, und
- der Schrumpf der Folie in Längs- und Querrichtung unterhalb von 5 % liegt.

Die Unteransprüche geben bevorzugte Ausführungsformen der Erfindung an, welche nachstehend zusätzlich erläutert werden.

Erfindungsgemäß kann die Folie mehrschichtig oder auch einschichtig sein und besteht dann nur aus der im folgenden beschriebenen Basisschicht. Die Basisschicht ist im Sinne der vorliegenden Erfindung diejenige Schicht, welche die größte Schichtdicke von allen vorhandenen Schichten aufweist. Im allgemeinen macht die Basisschicht bei mehrschichtigen Ausführungsformen mindestens 40 %, vorzugsweise 50 bis 98 %, der Gesamtfoliendicke aus. In der mehrschichtigen Ausführungsform weist die Folie auf ihrer Basisschicht mindestens eine, gegebenenfalls beidseitig Deckschicht/en auf, welche die äußeren Schichten der Folie bilden. In einer weiteren mehrschichtigen Ausführungsform weist die Folie auf ihrer Basisschicht mindestens eine, gegebenenfalls beidseitig Zwischenschicht/en auf.

Die Basisschicht der Folie enthält im allgemeinen mindestens 85-100 Gew.-%, vorzugsweise 90-99 Gew.-%, insbesondere 90-95 Gew.-%, jeweils bezogen auf die Basissicht eines nachstehend beschriebenen Propylenpolymeren, welches sich strukturell wesentlich von den herkömmlichen isotaktischen Propylenhomopolymeren, die üblicherweise in der Basisschicht von boPP-Folien eingesetzt werden, unterscheidet. Diese Strukturunterschiede können durch die Herstellung der Propylenpolymeren mittels neuartiger Metallocen-Katalysatoren erzielt werden..

Ein Merkmal dieses Strukturunterschiedes ist eine mittlere isotaktische Blocklänge des Propylenpolymeren zwischen zwei Kettenbaufehlern von mindestens 40, vorzugsweise mindestens 60 und insbesondere mindestens 70 Propyleneinheiten.

Das erfindungsgemäß eingesetzte Polypropylen kann zusätzlich über weitere Parameter charakterisiert werden, die mit der besonderen Struktur des Polymeren verknüpft sind.

Neben einer definierten mittleren isotaktischen Blocklänge zeichnet sich das Polypropylen durch einen besonders niedrigen n-heptanlöslichen Anteil aus, der kleiner als 1,0 Gew.-%., vorzugsweise > 0 bis 0,6 Gew.-% ist und insbesondere im Bereich von 0,5 bis 0,005 Gew.-% liegt, jeweils bezogen auf das Gewicht des Ausgangspolymeren.

Der n-heptanunlösliche Anteil des Propylenpolymeren ist im allgemeinen hochisotaktisch. Der mittels $^{13}C$-NMR-Spektroskopie bestimmte Kettenisotaxie-Index des n-heptanunlöslichen Anteils beträgt mindestens 95 %, vorzugsweise mindestens 96 % und insbesondere mindestens 97 bis 99 %.

Die Molekulargewichtsverteilung ist ein weiterer geeigneter Parameter zur Charakterisierung der Polymerstruktur. Sie ist vorteilhafterweise vergleichsweise eng. Das Verhältnis des Gewichtsmittels $M_w$ zum Zahlenmittel $M_n$ beträgt bevorzugt weniger als 4, vorzugsweise weniger als 3. Es liegt insbesondere im Bereich von 1,5 bis 2,7.

Es war völlig überraschend, daß sich diese neuartigen Polypropylene trotz des ausgesprochen niedrigen n-heptanlöslichen Anteiles, des hohen Kettenisotaxie - Index und der sehr engen Molekulargewichtsverteilung zu biaxial orientierten Polypropylenfolien verstrecken lassen. Weiterhin war es sehr überraschend, daß die aus dem neuartigen Polymeren hergestellten Folien eine deutlich verbesserte Dimensionsstabilität aufweisen.

Es hat sich gezeigt, daß die Strukturunterschiede des Polypropylens, die durch dessen Herstellung mittels Metallocen-Katalysator bedingt sind, günstig für die Dimensionsstabilität der Folie, d.h. günstig für einen geringen Schrumpf bei erhöhter Temperatur ist. Der Schrumpf in Längs- und Querrichtung ist bei Folien mit einer Basisschicht aus Metallocen-PP deutlich geringer als bei Folien aus Standard PP.

Das Propylenpolymer der vorstehend beschriebenen Struktur enthält im allgemeinen mindestens 90 Gew.-%, vorzugweise 94 bis 100 Gew.-%, insbesondere 98 bis 100 Gew.-%, Propyleneinheiten. Der entsprechende Comonomergehalt von höchstens 10 Gew.-% bzw. 0 bis 6 Gew.-% bzw. 0 bis 2 Gew.-% besteht, wenn vorhanden, im allgemeinen aus Ethylen. Die Angaben in Gew.-% beziehen sich jeweils auf das Propylenpolymere. Der Schmelzpunkt liegt im allgemeinen im Bereich von 140 bis 175 °C, vorzugsweise von 150 bis 165°C und insbesondere von 155 bis 162°C und der Schmelzflußindex (Messung DIN 53 735 bei 21,6 N Belastung und 230°C) beträgt 1,0 bis 30 g/10 min, vorzugsweise von 1,5 bis 20 g/10 min und insbesondere 2,0 bis 16 g/10 min.

Die vorstehend beschriebenen Polypropylene können vorteilhaft durch an sich bekannte Verfahren hergestellt werden, bei denen Metallocenkatalysatoren eingesetzt werden. Die Herstellung dieser Polyolefine ist nicht Gegenstand der vorliegenden Erfindung. Die entsprechenden Verfahren sind bereits in EP-A-0 302 424, EP-A-0 336 128 und EP-A-0 336 127 und EP-A-0 576 970 beschrieben, auf die hier ausdrücklich Bezug genommen wird.

Die herkömmlichen Ziegler-Natta-Katalysatoren weisen mehrere unterschiedliche polymerisationsaktive Zentren auf, von denen jedes ein andersartiges Polymeres herstellt. Dies führt zu Ketten mit stark unterschiedlichen Molmassen. Es werden praktisch sowohl wachsartige Polymere mit Kettenlängen von $M_n$ kleiner als 10 000 als auch ultrahochmolekulare Polymere mit einem $M_n$ von größer als 1 000 000 erhalten. Gleichzeitig sind die aktiven Zentren unterschiedlich in ihrer Stereospezifität. Das Spektrum reicht von völlig unspezifischen Zentren über syndiospezifische Zentren zu isospezifischen Zentren, wobei letztere wiederum eine unterschiedliche Isospezifität aufweisen. Dies führt zu einem Produktgemisch aus ataktischem Polypropylen, syndiotaktischem Polypropylen und isotaktischem Polypropylen mit unterschiedlicher Kristallinität, d.h., mit unterschiedlichen Schmelzpunkten. Syndiotaktisches Polypropylen führt zu Verzug in der Folie, ataktisches Polypropylen zu Ausdünstungen und zur Reduzierung der Folienhärte und das isotaktisches Polypropylen ist ein Material mit unterschiedlichen Schmelzpunkten, also kein einheitliches Produkt.

Kleine Schwankungen in den Polymerisationsbedingungen führen zu Schwankungen in der Zusammensetzung der drei charakteristischen Kettentypen, d.h. wiederum zu einem unterschiedlichen, nicht eindeutig zu charakterisierenden Produkt.

Die Metallocen-Katalysatoren haben dagegen ein eindeutig zu charakterisierendes Polymerisationszentrum, das auf den jeweiligen wünschenswerten Polymertypen durch Variation der Metallocen-Ligand-Sphäre maßgeschneidert werden kann. Die Verteilung der Kettenlänge ist einheitlich. Das $M_w/M_n$ ist klein und liegt zwischen 1,7 und 4,0, vorzugsweise zwischen 1,8 und 3,0 und ganz insbesondere zwischen 2,0 und 2,7 (Schulz-Flory-Verteilung). Gleichfalls weisen die aktiven Zentren auch eine einheitliche Stereospezifität auf, was zu Ketten mit einem einheitlichen Schmelzpunkt, bzw. Ketten mit einheitlichem stereospezifischem Aufbau führt. Es werden somit Polymerketten gebildet, die sich in ihren mittleren isotaktischen Blocklängen nur geringfügig unterscheiden. Dies spiegelt sich auch in einem einheitlichen Schmelzpunkt wieder.

Die Basisschicht der erfindungsgemäßen Folie kann gegebenenfalls zusätzlich zu dem vorstehend beschriebenen Metallocen-Propylenpolymeren übliche Additive in jeweils wirksamen Mengen enthalten. Übliche Additive sind Antiblockmittel, Neutralisationsmittel, Stabilisatoren, Antistatika und/oder Gleitmittel.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%. Des weiteren ist Glycerinmonostearat geeignet und wird in einer Menge von 0,03 % bis 0,5 % als Antistatikum eingesetzt.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,8 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders

geeignet sind.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-% in der Basisschicht. Ein insbesondere geeignetes aliphatisches Säureamid ist Erucasäureamid. Der Zusatz von Polydimethylsiloxanen ist im Bereich von 0,02 bis 2,0 Gew.-% bevorzugt, insbesondere Polydimethylsiloxane mit einer Viskosität von 5 000 bis 1 000 000 $mm^2/s$.

Als Stabilisatoren können die üblichen stabilisierend wirkenden Verbindungen für Ethylen-, Propylen- und andere $\alpha$-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxy-phenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Dihydrotalcit, Calciumstearat und/oder Calciumcarbonat einer mittleren Teilchengröße von höchstens 0,7 $\mu$m, einer absoluten Teilchengröße von kleiner 10 $\mu$m und einer spezifischen Oberfläche von mindestens 40 $m^2/g$.

Die erfindungsgemäße Polypropylenfolie umfaßt in einer bevorzugten mehrschichtigen Ausführungsform mindestens eine, gegebenenfalls beidseitig Deckschicht/en aus Polymeren aus $\alpha$-Olefinen mit 2 bis 10 Kohlenstoffatomen. Im allgemeinen enthält die Deckschicht mindestens 70 Gew.-%, vorzugsweise 80 bis 100 Gew.-%, insbesondere 90 bis 98 Gew.-%, der $\alpha$-olefinischen Polymeren, jeweils bezogen auf das Gewicht der Deckschicht und gegebenfalls Additive in jeweils wirksamen Mengen.

Beispiele für derartige $\alpha$-olefinische Polymere sind

ein Propylenhomopolymer oder
ein Copolymer von

Ethylen und Propylen oder
Ethylen und Butylen-1 oder
Propylen und Butylen-1 oder

ein Terpolymer von
Ethylen und Propylen und Butylen-1 oder
eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren wobei insbesondere Propylenhomopolymer oder
statistische Ethylen-Propylen-Copolymere mit
einem Ethylengehalt von 1 bis 10 Gew.-%, bevorzugt 2,5 bis 8 Gew.-%, oder
statistische Propylen-Butylen-1-Copolymere mit
einem Butylengehalt von 2 bis 25 Gew.-%, bevorzugt 4 bis 20 Gew.-%,
jeweils bezogen auf das Gesamtgewicht des Copolymeren, oder statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 2 bis 20 Gew.-%, bevorzugt 4 bis 20 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind.

Das in der Deckschicht eingesetzte Propylenhomopolymere besitzt einen Schmelzpunkt von 140°C oder höher, vorzugsweise 150 bis 165°C. Isotaktisches Homopolypropylen mit einem n-heptanlöslichen Anteil von 6 Gew.-% und weniger, bezogen auf das isotaktische Homopolypropylen, ist bevorzugt. Das Homopolymere hat im allgemeinen

einen Schmelzflußindex von 1,0 g/10 min bis 20 g/10 min.

Die in der Deckschicht bevorzugt eingesetzten vorstehend beschriebenen Co- und Terpolymeren weisen im allgemeinen einen Schmelzflußindex von 1,5 bis 30 g/10 min auf. Der Schmelzpunkt liegt vorzugsweise im Bereich von 120 bis 140°C. Das vorstehend beschriebene Blend aus Co- und Terpolymeren hat einen Schmelzflußindex von 5 bis 9 g/10 min und einen Schmelzpunkt von 120 bis 150°C. Alle vorstehend angegebenen Schmelzflußindices werden bei 230°C und einer Kraft von 21,6 N (DIN 53 735) gemessen.

In einer matten Ausführungsform enthält die Deckschicht zusätzlich ein High Density Polyethylen (HDPE), welches mit den vorstehend beschriebenen Deckschichtpolymeren gemischt oder geblendet wird. Die Zusammensetzung und Einzelheiten der matten Deckschichten sind beispielsweise in EP 0 563 796 oder EP 0 622 beschrieben, auf die hier ausdrücklich Bezug genommen wird.

Die Deckschicht/en kann/können auch das vorstehend für die Basisschicht beschriebene Metallocen-katalysierte-Propylenpolymere enthalten.

Gegebenenfalls können der/den Deckschicht/en die vorstehend für die Basisschicht beschriebenen Additive wie Antistatika, Antiblockmittel, Gleitmittel, Neutralisationsmittel und Stabilisatoren zugesetzt werden. Die Mengenangaben in diesen vorstehenden Ausführungen beziehen sich auf das entsprechende Gewicht der Deckschicht. In einer bevorzugten Ausführungsform enthält/enthalten die Deckschicht/en eine Kombination von Antiblockmittel, vorzugsweise $SiO_2$, und Gleitmittel, vorzugsweise Polydimethylsiloxan.

Die erfindungsgemäße Folie umfaßt mindestens die vorstehend beschriebene Basisschicht, vorzugsweise mindestens eine Deckschicht. Je nach ihrem vorgesehenen Verwendungszweck kann die Folie eine weitere Deckschicht auf der gegenüberliegenden Seite aufweisen. Gegebenenfalls kann/können auch einseitig eine oder beidseitig Zwischenschicht/en zwischen der Basis- und der/den Deckschicht/en aufgebracht werden.

Bevorzugte Ausführungsformen der erfindungsgemäßen Polypropylenfolie sind dreischichtig. Aufbau, Dicke und Zusammensetzung einer zweiten Deckschicht können unabhängig von der bereits vorhandenen Deckschicht gewählt werden, wobei die zweite Deckschicht ebenfalls eine der vorstehend beschriebenen Polymeren oder Polymermischungen enthalten kann, welche aber nicht mit der der ersten Deckschicht identisch sein muß. Die zweite Deckschicht kann jedoch auch andere gängige Deckschichtpolymere enthalten.

Die Dicke der Deckschicht/en ist im allgemeinen größer als 0,1 µm und liegt vorzugsweise im Bereich von 0,1 bis 10 µm, vorzugsweise im Bereich von 0,3 bis 3 µm, insbesondere im Bereich von 0,4 bis 1,5 µm, wobei beidseitige Deckschichten gleich oder verschieden dick sein können.

Die Zwischenschicht/en kann/können aus den für die Deckschichten beschriebenen α-olefinischen Polymeren bestehen. In einer bevorzugten Ausführungsform besteht/bestehen die Zwischenschicht/en aus dem für die Basisschicht beschriebenen Propylenpolymeren. Die Zwischenschicht/en kann/können die für die einzelnen Schichten beschriebenen üblichen Additive enthalten. Die Dicke der Zwischenschicht/en ist im allgemeinen größer als 0,3 µm und liegt vorzugsweise im Bereich von 1,0 bis 15 µm, insbesondere 1,5-10 µm.

Die Gesamtdicke der erfindungsgemäßen Polypropylenfolie kann innerhalb weiter Grenzen variieren und richtet sich nach dem beabsichtigten Einsatz. Sie beträgt vorzugsweise 4 bis 100 µm, insbesondere 5-60 µm, vorzugweise 6-30 µm, wobei die Basisschicht etwa 40 bis 100 % der Gesamtfoliendicke ausmacht.

Die Erfindung betrifft weiterhin ein Verfahren zur Herstellung der erfindungsgemäßen Polypropylenfolie nach dem an sich bekannten Coextrusionsverfahren.

Im Rahmen dieses Verfahrens wird so vorgegangen, daß die Schicht oder die den einzelnen Schichten der Folie entsprechende/n Schmelze/n durch eine Flachdüse coextrudiert wird/werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Die Längsstreckungsverhältnisse liegen im Bereich von 3 bis 9, vorzugsweise 5 - 9 oder 4,5 - 8,5. Die Querstreckverhältnisse liegen im Bereich von 4 bis 12, vorzugsweise 5-11, insbesondere 7 bis 10.

An die biaxiale Streckung der Folie schließt sich ihre Thermofixierung (Wärmebehandlung) an, wobei die

Folie etwa 0,1 bis 10 s lang bei einer Temperatur von 100 bis 160°C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie abgekühlt und verfestigt wird, durch einen Heiz- und Kühlkreislauf bei einer Temperatur von 10 bis 100°C, vorzugsweise 20-70°C zu halten.

Die Temperaturen, bei denen Längs- und Querstreckung durchgeführt werden, können in einem relativ großen Bereich variieren und richten sich nach den gewünschten Eigenschaften der Folie. Im allgemeinen wird die Längsstreckung vorzugsweise bei 80 bis 170°C, vorzugsweise 80-150°C und die Querstreckung vorzugsweise bei 100 bis 200°C, vorzugsweise 120-170°C durchgeführt.

Bevorzugt wird/werden nach der biaxialen Streckung eine oder beide Oberfläche/n der Folie nach einer der bekannten Methoden corona- oder flammbehandelt. Die Behandlungsintensität liegt im allgemeinen im Bereich von 37 bis 50 mN/m, vorzugsweise 39 bis 45 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 400 und 3 000 V, vorzugsweise liegt sie im Bereich von 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die erfindungsgemäße Folie mit einer Basisschicht aus Metallocen-PP zeichnet sich durch sehr niedrige Schrumpfwerte, insbesondere in Längsrichtung (Maschinenrichtung) aus. Die Schrumpfwerte in Längsrichtung und in Querrichtung liegen unterhalb von 5 %, vorzugsweise unterhalb von 3 % und insbesondere unterhalb von 2 %.

Zur Charakterisierung der Rohstoffe und der Folien wurden die folgenden Meßmethoden benutzt:

Schrumpf

Die Längs- und Querschrumpfwerte beziehen sich auf die jeweilige Längenausdehnung der Folie (längs $L_0$ und quer $Q_0$) vor dem Schumpfprozeß. Die Längsrichtung ist die Maschinenrichtung, als Querrichtung wird entsprechend die Richtung quer zum Maschinenlauf definiert. Der Probekörper wird im Umluftofen über eine Dauer von 5 min mit einer Temperatur von 120°C belastet. Anschließend werden nach vollständiger Abkühlung des Probekörpers die Längenausdehnungen längs und quer erneut bestimmt ($L_1$ und $Q_1$). Als Schrumpf wird dann die Differenz der ermittelten Längenausdehnung im Verhältnis zur ursprünglichen Länge $L_0$ and $Q_0$ angegeben.

$$\text{Längsschrumpf } L_s \ \frac{L_0 - L_1}{L_0}$$

$$\text{Querschrumpf } Q_s \ \frac{Q_0 - Q_1}{Q_0}$$

Diese Bestimmungsmethode für den Längs- und Querschrumpf entspricht DIN 404 34.

Schmelzflußindex

Der Schmelzflußindex wurde nach DIN 53 735 bei 21,6 N Belastung und 230°C gemessen.

Schmelzpunkt

DSC-Messung, Maximum der Schmelzkurve, Aufheizgeschwindigkeit 20°C/min.

Wasserdampf- und Sauerstoffdurchlässigkeit

Die Wasserdampfdurchlässigkeit wird gemäß DIN 53 122 Teil 2 bestimmt. Die Bestimmung der Sauerstoffbarrierewirkung erfolgt gemäß Entwurf DIN 53 380 Teil 3 bei einer Luftfeuchte von 53 %.

Trübung

Die Trübung der Folie wurde nach ASTM-D 1003-52 gemessen.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60 oder 85 eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportio-nale elektrische Größe angezeigt. Der Meßwert ist dimensionslos und muß mit dem Einstrahlwinkel angegeben werden.

Oberflächenspannung

Die Oberflächenspannung wurde mittels der sogenannten Tintenmethode (DIN 53 364) bestimmt.

Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

Reißfestigkeit, Reißdehnung

Die Reißfestigkeit und die Reißdehnung werden nach DIN 53455 bestimmt.

E-Modul

Der E-Modul wird gemäß DIN 53 457 bzw. ASTM 882 bestimmt.

Bestimmung des Warmblockverhaltens

Zur Messung des Warmblockverhaltens werden zwei einseitig filzbeklebte Holzklötzchen mit den Abmessungen 72 mm x 41 mm x 13 mm in die zu vermessende Folie eingeschlagen und gesiegelt. Auf die mit den Filzauflagen zueinandergekehrten Holzklötzchen wird ein Gewicht von 200 g plaziert und dieser Aufbau in einen auf 70°C vortemperierten Wärmeofen gebracht und dort über 2 h belassen. Danach wird für 30 min auf Raumtemperatur (21°C) abgekühlt, das Gewicht von den Holzklötzchen heruntergenommen und das obere Klötzchen mittels einer mechanischen Apparatur vom unteren Klötzchen heruntergezogen. Die Auswertung erfolgt über 4 Einzelmessungen, über die dann eine maximale Abschubkraft (gemessen in N) festgestellt wird. Die Spezifikation ist erfüllt, wenn keine der Einzelmessungen über 5 N liegt.

Molekulargewichtsbestimmung

Das mittlere Molekulargewicht $M_w$ und $M_n$ (Gewichtsmittel $M_w$ und Zahlenmittel $M_n$) und die mittlere Molmassen-Dispersität wurden in Anlehnung an DIN 55 672, Teil 1, mittels Gelpermeationschromatographie bestimmt. Anstelle von THF wurde als Elutionsmittel Orthodichlorbenzol verwendet. Da die zu untersuchenden olefinischen Polymeren bei Raumtemperatur nicht löslich sind, wird die gesamte Messung bei erhöhter Temperatur (135°C) durchgeführt.

Isotaktischer Anteil

Der isotaktische Anteil des Homopolymeren als auch der isotaktische Anteil der Folie können in Näherung

durch die unlösliche Fraktion des Rohstoffes bzw. der Folie in einem geeigneten Lösungsmittel charakterisiert werden. Es hat sich als zweckmäßig erwiesen n-Heptan zu verwenden. Üblicherweise führt man eine Soxhlet-Extraktion mit siedendem n-Heptan durch. Zur Erzielung einer guten Reproduzierbarkeit ist es zweckmäßig, das Soxhlet anstelle von Granulat mit einem Preßling zu befüllen. Die Dicke des Preßlings sollte hierbei 500 Mikrometer nicht übersteigen. Für die quantitative Erfassung des ataktischen Anteils des Polymeren ist es von entscheidender Bedeutung, eine ausreichende Extraktionszeit sicherzustellen. In der Regel liegt die Extraktionszeit im Bereich von 8 bis 24 Stunden.

Die operationelle Definition des isotaktischen Anteils $PP_{iso}$ in Prozent ist gegeben durch das Verhältnis der Gewichte der getrockneten n-heptanunlöslichen Fraktion zur Einwaage:

$$PP_{iso} = 100x \text{ (n-heptanunlösliche Fraktion/Einwaage)}$$

Eine Analyse des getrockneten n-Heptan-Extraktes zeigt, daß dieser in der Regel nicht aus reinem ataktischen Propylenpolymeren besteht. Bei der Extraktion werden auch aliphatische und olefinische Oligomere, insbesondere isotaktische Oligomere sowie auch mögliche Zusatzstoffe wie z.B. hydrierte Kohlenwasserstoffharze, miterfaßt.

Kettenisotaxie-Index

Der oben definierte isotaktische Anteil $PP_{iso}$ ist für die Charakterisierung der Kettenisotaxie der Polymeren nicht ausreichend. Es erweist sich als sinnvoll, den Kettenisotaxie-Index II des Propylenpolymeren mittels hochauflösender $^{13}C$-NMR-Spektroskopie zu bestimmen, wobei als NMR-Probe nicht der Originalrohstoff, sondern dessen n-heptanunlösliche Fraktion zu wählen ist. Zur Charakterisierung der Isotaxie von Polymerketten benutzt man in der Praxis meist den $^{13}C$-NMR-spektroskopischen Triaden-Isotaxie-Index II (Triaden).

Bestimmung des triadenbezogenen Kettenisotaxie-Index II (Triaden)

Die Bestimmung des Kettenisotaxie-Index II (Triaden) des n-heptanunlöslichen Anteils des Polymeren sowie der Folie wird aus dessen bzw. deren $^{13}$CNMR-Spektrum bestimmt. Man vergleicht die Intensitäten von Triaden-Signalen, welche aus den Methylgruppen mit unterschiedlichen lokalen Umgebungen resultieren.

Hinsichtlich der Auswertung des $^{13}C$-NMR-Spektrums sind zwei Fälle zu unterscheiden:

A) Der untersuchte Rohstoff ist ein reines Propylenhomopolymer ohne statistischen $C_2$-Gehalt.
B) Der untersuchte Rohstoff ist ein Propylenpolymer mit einem geringen statistischen $C_2$-Gehalt, im folgenden $C_2$-$C_3$-Copolymer genannt.

Fall A:

Der Kettenisotaxie-Index des Homopolymeren wird aus dessen $^{13}C$-NMR-Spektrum bestimmt. Man vergleicht die Intensitäten von Signalen, welche aus den Methylgruppen mit unterschiedlicher Umgebung resultieren. Im $^{13}C$-NMR-Spektrum eines Homopolymeren treten im wesentlichen drei Gruppen von Signalen, sogenannte Triaden, auf.

1. Bei einer chemischen Verschiebung von etwa 21 bis 22 ppm tritt die "mm-Triade" auf, welche den Methylgruppen mit links und rechts unmittelbar benachbarten Methylgruppen zugeordnet wird.

2. Bei einer chemischen Verschiebung von etwa 20,2 bis 21 ppm tritt die "mr-Triade" auf, welche den Methylgruppen mit links oder rechts unmittelbar benachbarten Methylgruppen zugeordnet wird.

3. Bei einer chemischen Verschiebung von etwa 19,3 bis 20 ppm tritt die "rr-Triade" auf, welche den Methylgruppen ohne unmittelbar benachbarte Methylgruppen zugeordnet wird.

Die Intensitäten der zugeordneten Signalgruppen werden als Integral der Signale bestimmt. Der Kettenisotaxie-Index ist wie folgt definiert:

$$\text{II Triaden} = \frac{J_{mm} + 0{,}5\, J_{mr}}{J_{mm} + J_{mr} + J_{rr}} \cdot 100$$

worin $J_{mm}$, $J_{mr}$ und $J_{rr}$ die Integrale der zugeordneten Signalgruppen bedeuten.

Fall B:

Abb. 1 (nicht vorhanden in der gegenwärtigen Anmeldung) ist eine schematisch vergrößerte Darstellung eines $^{13}C$-NMR Spektrums von einem Ethylen-Propylen-Copolymeren. Die chemische Verschiebung der interessierenden Methylgruppen liegt im Bereich 19 bis 22 ppm. Wie in Abb. 1 ersichtlich kann das Spektrum der Methylgruppen in drei Blöcke unterteilt werden. In diesen Blöcken erscheinen die $CH_3$-Gruppen in triadischen Sequenzen, deren Zuordnung zu den lokalen Umgebungen im folgenden näher erläutert wird:

Block 1:

$CH_3$-Gruppen in der PPP-Sequenz (mm-Triade)

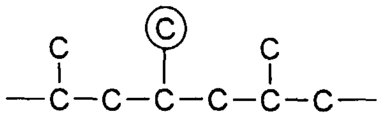

Block 2:

$CH_3$-Gruppen in der PPP-Sequenz (mr- oder rm-Triaden)

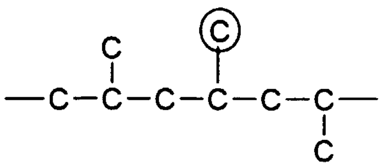

und $CH_3$-Gruppen in der EPP-Sequenz (m-Kette):

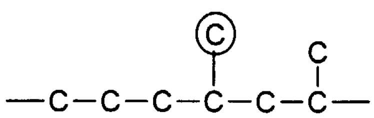

Block 3:

$CH_3$-Gruppen in der PPP-Sequenz (rr-Triaden):

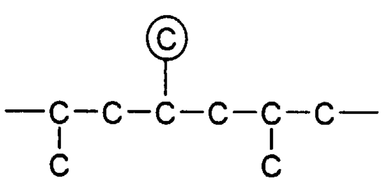

$CH_3$-Gruppen in einer EPP-Sequenz (r-Kette):

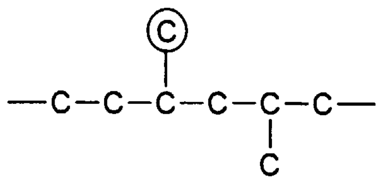

$CH_3$-Gruppen in einer EPE-Sequenz:

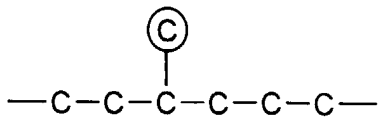

Bei der Bestimmung des triadenbezogenen Kettenisotaxie-Index II (Triaden) des n-heptanunlöslichen Anteils eines Ethylen-Propylen-Copolymers werden nur PPPTriaden in Betracht gezogen, d.h. nur solche Propylen-Einheiten, die zwischen zwei benachbarten Propylen-Einheiten liegen (siehe auch EP-B-0 115 940, Seite 3, Zeilen 48 und 49).

Die Definition des Triaden-Isotaxie-Index eines Ethylen-Propylen-Copolymeren lautet:

$$\text{II (Triaden)} = 100x(J_{mm}/J_{ppp})$$

Berechnung des Kettenisotaxie-Index eines Ethylen-Propylen-Copolymers:

1. $J_{mm}$ ist gegeben durch das Peakintegral von Block 1.

2. Berechne das Integral ($J_{gesamt}$) aller Methylgruppenpeaks in den Blöcken 1, 2 und 3.

3. Durch einfache Betrachtungen läßt sich zeigen, daß

$$J_{ppp} = J_{gesamt}-J_{EPP}-J_{EPE}.$$

Probenvorbereitung und Messung:

60 bis 100 mg Polypropylen werden in 10 mm-NMR-Röhrchen eingewogen und Hexachlorbutadien und Tetrachlorethan in einem Mischungsverhältnis von etwa 1,5:1 zugegeben, bis eine Füllhöhe von ca. 45 mm erreicht ist. Die Suspension wird so lange (in der Regel ca. eine Stunde) bei ca. 140°C aufbewahrt, bis eine homogene Lösung entstanden ist. Um den Lösevorgang zu beschleunigen, wird die Probe von Zeit zu Zeit mit einem Glasstab gerührt.

Die Aufnahme des $^{13}C$-NMR-Spektrums erfolgt bei erhöhter Temperatur (in der Regel 365 K) unter Standardmeßbedingungen (halbquantitativ).

Mittlere isotaktische Blocklänge $n_{iso}$

Die mittlere isotaktische Blocklänge $n_{iso}$ wird aus dem $^{13}C$-NMR-Spektrum gemäß der Formel

$$n_{iso} = 1 + 2\ J_{mm}/J_{mr}$$

bestimmt.

Herstellung der Propylenpolymeren

Die Propylenpolymeren wurden mit Hilfe von Metallocenkatalysatoren durch die im folgenden exemplarisch beschriebenen Polymerisationsreaktionen hergestellt:

Beispiel 1

Ein trockener 150 $dm^3$ großer Reaktor wurde mit Stickstoff gespült und bei 20°C mit 80 $dm^3$ eines Benzinschnittes mit dem Siedebereich 100 bis 120°C gefüllt. Dann wurde der Gasraum durch fünfmaliges Aufdrücken von Propylen, welches unter einem Druck von 2 bar steht, und Entspannen stickstofffrei gespült.

Nach Zugabe von 50 l flüssigem Propylen wurden 64 $cm^3$ toluolische Methylaluminoxlösung (entsprechend 100 m mol Al, Molmasse nach kryoskopischer Bestimmung 1000 g/mol) zugegeben und der Reaktorinhalt auf 50°C hochgeheizt. Durch Zudosierung von Wasserstoff wurde ein Wasserstoffgehalt im Gasraum des Reaktors von 1,2 % eingestellt und später dann durch Nachdosierung während der gesamten Polymerisationszeit konstant gehalten (Überprüfung on-line durch Gaschromatographie).

20 mg des Metallocens rac-Dimethylsilandiylbis (2-methyl-4,6-diisopropyl-1-indenyl) zirkondichlorid wurden in 16 ml toluolischer Methylaluminoxanlösung (entsprechend 25 m mol Al) gelöst und in den Reaktor gegeben.

Durch Kühlung wurde der Reaktor 10 h bei 50°C gehalten, dann wurde durch Zugabe von 50 $Ndm^3$ $CO_2$-Gas die Polymerisation gestoppt und das gebildete Polymer vom Suspensionsmedium abgetrennt und getrocknet.

Es wurden 21,9 kg Polymerpulver entsprechend einer Metallocenaktivität von 109,5 kg PP/g Metallocen * h erhalten. Das Polymere ist durch folgende weitere Daten gekennzeichnet:

| | |
|---|---|
| Viskositätszahl VZ | 228 $cm^3$/g |
| mittlere Molmasse $M_w$ | 225 000 g/mol |
| $M_w/M_n$ | 2,5 |
| Schmelzpunkt $T_m$ | 150°C |
| Schmelzflußindex MFI | 7,0 g/10 min |
| Mittlere isotaktische Blocklänge $n_{iso}$ | ca. 80 |
| Isotaxie-Index | ca. 97,5 % |

Beispiel 2

Die Polymerisation von Beispiel 1 wurde wiederholt, verwendet wurde jedoch das Metallocen rac-Dimethylsilandiylbis (2-methyl-4,5-benzo-1-indenyl) zirkondichlorid. Die Polymerisationstemperatur betrug 60°C und es wurden 6,5 h polymerisiert. Die Metallocenaktivität betrug in diesem Fall 173 kg PP/g Metallocen *h. Das Polymere ist durch die weiteren Daten wie folgt gekennzeichnet:

| | |
|---|---|
| Viskositätszahl VZ | 258 $cm^3$/g |
| mittlere Molmasse $M_w$ | 302 000 g/mol |
| $M_w/M_n$ | 2,3 |
| Schmelzpunkt $T_m$ | 147°C |
| Schmelzflußindex MFI | 4,3 g/10 min |
| Mittlere isotaktische Blocklänge $n_{iso}$ | ca. 80 |
| Isotaxie-Index | ca. 97,5 % |

Beipiel 3

Die Polymerisation von Beispiel 1 wurde wiederholt, verwendet wurden jedoch 10 mg des Metallocen rac-Dimethylsilandiylbis (2-methyl-4-phenyl-1-indenyl) zirkondichlorid. Die Wasserstoffkonzentration im Gasraum des Reaktors war 1,8 Vol.-%. Die Metallocenaktivität betrug 227 kg PP/g Metallocen *h. Das Polymere ist durch die weiteren Daten wie folgt gekennzeichnet:

| | |
|---|---|
| Viskositätszahl VZ | 230 $cm^3$/g |
| mittlere Molmasse $M_w$ | 274 500 g/mol |
| $M_w/M_n$ | 2,0 |
| Schmelzpunkt $T_m$ | 160°C |
| Schmelzflußindex MFI | 4,0 g/10 min |
| Mittlere isotaktische Blocklänge $n_{iso}$ | ca. 100 |
| Isotaxie-Index | ca. 98 % |

Beispiel 4

Es wurde wie in Beispiel 1 verfahren, während der Polymerisation wurden jedoch zwei unterschiedliche Wasserstoffkonzentrationen verwendet. Zunächst wurde im Gasraum des Reaktors ein Wasserstoffgehalt von 10 Vol.-% eingestellt und durch Nachdosierung konstant gehalten bis der Polypropylendruck im Reaktor durch Abpolymerisieren des Propylens auf 6 bar gefallen war. Dann wurde durch kurzes Abgasen der Wasserstoff auf 1,0 Vol.-% reduziert und bei dieser Wasserstoffkonzentration die Polymerisation weitergeführt.

Es wurden 10 mg des Metallocens rac-Dimethylsilandiylbis (2-ethyl-4-phenyl-1-indenyl) zirkondichlorid wurden in 16 ml toluolischer Methylaluminoxanlösung (entsprechend 25 m mol Al) gelöst und in den Reaktor gegeben.

Es wurden 16,2 kg Polymerpulver entsprechend einer Metallocenaktivität von 162 kg PP/ g Metallocen * h erhalten. Das Polymere ist durch folgende weitere Daten gekennzeichnet:

| | |
|---|---|
| Viskositätszahl VZ | 245 $cm^3/g$ |
| mittlere Molmasse $M_w$ | 358 000 g/mol |
| $M_w/M_n$ | 3,0 |
| Schmelzpunkt $T_m$ | 161°C |
| Schmelzflußindex MFI | 4,6 g/10 min |
| Mittlere isotaktische Blocklänge $n_{iso}$ | ca. 100 |
| Isotaxie-Index | ca. 98 % |

Herstellung der Folien

Beispiel 5

Es wurde durch stufenweise Orientierung in Längs- und Querrichtung eine transparente einschichtige Folie mit einer Gesamtdicke von 5 µm hergestellt. Der verwendete Rohstoff für die Folie war:

| | |
|---|---|
| 99,85 Gew.-% | hochisotaktisches Polypropylen der Firma Hoechst AG |
| 0,15 Gew.-% | Stabilisator |

Das Polypropylenhomopolymer wurde nach Beispiel 3 hergestellt. Die Herstellungsbedingungen in den einzelnen Verfahrensschritten waren:

| | | |
|---|---|---|
| Extrusion | Temperaturen | 280°C |
| Längsstreckung | Temperatur | 115°C |
| Querstreckung | Temperatur | 160°C |
| | Querstreckverhältnis | 11 |
| Fixierung | Temperatur | 150°C |
| | Konvergenz | 15 % |

Die auf diese Weise hergestellte Folie hatte die in der Tabelle aufgelisteten Eigenschaften (erste Zeile: Beispiel 5).

Beispiel 6

Es wurde durch Coextrusion und anschließender stufenweise Orientierung in Längs- und Querrichtung eine transparente dreischichtige Folie mit symmetrischem Aufbau mit einer Gesamtdicke von 16 µm hergestellt. Die Deckschichten hatten eine Dicke von jeweils 0,6 µm.

A-Basisschicht:

| | |
|---|---|
| 99,85 Gew.-% | hochisotaktisches Polypropylen der Firma Hoechst AG |

(fortgesetzt)

| | |
|---|---|
| 0,15 Gew.-% | Antistatikum |

Das Polypropylen des Basisrohstoffs wurde nach Beispiel 3 hergestellt.

B-Deckschichten:

| | |
|---|---|
| 98,77 Gew.-%<br>0,33 Gew.-%<br>0,90 Gew.-% | statistisches Ethylen-Propylen-Copolymeres mit einem $C_2$-Gehalt von 4,5 Gew.-%<br>Antiblockmittel mit einer mittleren Teilchengröße von 2 µm<br>Gleitmittel |

Die Herstellungsbedingungen in den einzelnen Verfahrensschritten waren:

| | | | |
|---|---|---|---|
| Extrusion | Temperaturen | A-Schicht | 280°C |
| | | B-Schicht | 280°C |
| Längsstreckung | Temperatur | | 140°C |
| | Längssteckverhältnis | | 3,5 |
| Querstreckung | Temperatur | | 160°C |
| | Ouerstreckverhältnis | | 11 |
| Fixierung | Temperatur | | 150°C |
| | Konvergenz | | 15 % |

Die auf diese Weise hergestellte Folie hatte die in der Tabelle aufgelisteten Eigenschaften (Beispiel 6).

Vergleichsbeispiel 1

Im Vergleich zu Beispiel 6 wurde ein herkömmliches Polypropylen der Fa. Hoechst AG genommen. Der n-heptanlösliche Anteil der Folie hatte einen mittels $^{13}C$-NMR-Spektroskopie gemessenen Kettenisotaxie-Index von 93 %. Das $M_w/M_n$ betrug 4,5 und der n-heptanlösliche Anteil betrug 4 Gew.-%.

Tabelle

| | Foliendicke µm | E-Modul DIN 53 457 längs/quer $N/mm^2$ | Reißfestigkeit DIN 53 455 längs/quer $N/mm^2$ | Reißdehnung DIN 53 455 längs/quer % | Glanz DIN 67 530 | Schrumpf DIN 40 634 längs/quer % | Trübung ASTM D 1003-52 % | Reibung 14 Tage nach Produktion B-Seite/ B'-Seite | Kratzfestig-keit ΔTrübung | Warmblockverhalten N |
|---|---|---|---|---|---|---|---|---|---|---|
| B5 | 5 | 2600/4700 | 160/320 | 125/70 | 100 | 1,5/2,5 | 2,0 | 0,4/0,4 | 8 | 0,5 |
| B6 | 16 | 2400/4300 | 145/310 | 120/65 | 120 | 1,6/3,0 | 1,9 | 0,22/0,23 | 23 | 1,5 |
| VB1 | 16 | 2200/4100 | 140/300 | 160/60 | 100 | 5,7/5,5 | 2,5 | 0,24/0,27 | 28 | 1,8 |

B = Beispiel; VB = Vergleichsbeispiel

B-Seite: Walzenseite

B'-Seite: Seite für die Corona- oder Flammbehandlung, falls diese Behandlung durchgeführt wird

## Patentansprüche

1. Biaxial orientierte Polypropylenfolie, welche mindestens eine Basisschicht aufweist welche Polypropylen enthält, dadurch gekennzeichnet, daß

   - die mittlere isotaktische Blocklänge des Polypropylenmoleküls zwischen zwei Kettenbaufehlern im statistischen Mittel größer als 40 ist
   - der n-heptanunlösliche Anteil des Polypropylens einen Kettenisotaxie-Index, gemessen mittels $^{13}C$-NMR-Spektroskopie, von mindestens 95 % aufweist
   - das Verhältnis von Gewichtsmittel $M_w$ zu Zahlenmittel $M_n$ der Molekulargewichtsverteilung kleiner als 4 ist
   - der n-heptanlösliche Anteil des Polypropylens kleiner als 1 % ist, und
   - der Schrumpf der Folie in Längsrichtung und in Querrichtung unterhalb von 5 % liegt.

2. Polypropylenfolie gemäß Anspruch 1, dadurch gekennzeichnet, daß die Basisschicht ein Polypropylen enthält, dessen n-heptanunlöslicher Anteil einen Kettenisotaxie-Index, gemessen mittels $^{13}C$-NMR Spektroskopie, von mindestens 96 %, und vorzugsweise mindestens 97 %, aufweist.

3. Polypropylenfolie gemäß einem oder mehreren der Ansprüche 1 bis 2, dadurch gekennzeichnet, daß die Basisschicht ein Polypropylen enthält, dessen $M_w/M_n$ kleiner 3,0, und vorzugsweise kleiner als 2,7, ist.

4. Polypropylenfolie gemäß einem oder mehreren der Ansprüche 1 bis 3, dadurch gekennzeichnet, daß sie mindestens einseitig, vorzugsweise beidseitig, eine Deckschicht aus $\alpha$-olefinischen Polymeren aufweist.

5. Polypropylenfolie gemäß einem oder mehreren der Ansprüche 1 bis 4, dadurch gekennzeichnet, daß ein- oder beidseitige Zwischenschicht/en aus $\alpha$-olefinischen Polymeren zwischen der Basis- und der/den Deckschicht/en angebracht ist/sind.

6. Polypropylenfolie gemäß einem oder mehreren der Ansprüche 1 bis 5, dadurch gekennzeichnet, daß die Basisschicht Antistatikum enthält.

7. Polypropylenfolie gemäß einem oder mehreren der Ansprüche 1 bis 6, dadurch gekennzeichnet, daß die Basis- und/oder Deckschicht/en und/oder Zwischenschicht/en Neutralisationsmittel und/oder Stabilisator enthalten.

8. Polypropylenfolie gemäß einem oder mehreren der Ansprüche 1 bis 7, dadurch gekennzeichnet, daß die Deckschicht/en Gleitmittel und/oder Antiblockmittel enthält.

9. Polypropylenfolie gemäß einem oder mehreren der Ansprüche 1 bis 8, dadurch gekennzeichnet, daß die Zwischenschicht/en Neutralisationsmittel, Stabilisator, Antistatika und/oder Antiblockmittel enthält/enthalten.

10. Polypropylenfolie gemäß einem oder mehreren der Ansprüche 1 bis 9, daß die Deckschicht/en siegelfähig ist/sind.

11. Polypropylenfolie gemäß einem oder mehreren der Ansprüche 1 bis 10, daß die Deckschicht/en nicht siegelfähig ist/sind.

12. Polypropylenfolie gemäß einem oder mehreren der Ansprüche 1 bis 11, dadurch gekennzeichnet, daß die Dicke der Folie 4 bis 100 $\mu$m beträgt, wobei die Basisschicht etwa 40 bis 60 % der Gesamtdicke ausmacht.

13. Polypropylenfolie gemäß einem oder mehreren der Ansprüche 1 bis 12, dadurch gekennzeichnet, daß sie einschichtig ist.

14. Verfahren zur Herstellung einer Polypropylenfolie gemäß Anspruch 1, dadurch gekennzeichnet, daß die Polymeren der einzelnen Schichten in einem Extruder erwärmt, komprimiert und aufgeschmolzen werden, die den einzelnen Schichten der Folie entsprechenden Schmelzen gemeinsam und gleichzeitig durch eine Flachdüse extrudiert werden, und die so erhaltene Folie auf einer Abzugswalze abgezogen wird, wobei sie sich abkühlt und verfestigt und die so erhaltene Vorfolie längs und quer orientiert wird, wobei die Orientierung in Längsrichtung mit einem Längsstreckverhältnis von 5:1 bis 9:1 und in Querrichtung mit einem Querstreckverhältnis von 4:1 bis 12:1 erfolgt.

15. Verwendung der Polypropylenfolie gemäß einem oder mehreren Ansprüchen 1 bis 13 als Verpackungsfolie.

**16.** Verwendung der Polypropylenfolie gemäß einem oder mehreren Ansprüchen 1 bis 13 als Kaschierfolie.

**Claims**

**1.** Biaxially oriented polypropylene film having at least one base layer comprising polypropylene, characterised in that

- the mean isotactic block length of the polypropylene molecule between two structural chain defects is, as a statistical average, greater than 40,
- the n-heptane-insoluble fraction of the polypropylene has a chain isotactic index of at least 95%, measured by means of $^{13}$C-NMR spectroscopy,
- the ratio of the weight average $M_w$ to the number average $M_n$ of the molecular weight distribution is less than 4,
- the n-heptane-soluble fraction of the polypropylene is less than 1%, and
- the shrinkage of the film in the longitudinal direction and in the transverse direction is less than 5%.

**2.** Polypropylene film according to claim 1, characterised in that the base layer comprises a polypropylene, the n-heptane-insoluble fraction of which has a chain isotactic index, measured by means of $^{13}$C-NMR spectroscopy, of at least 96%, and preferably of at least 97%.

**3.** Polypropylene film according to one or more of claims 1 and 2, characterised in that the base layer comprises a polypropylene, the $M_w/M_n$ of which is less than 3.0, and preferably less than 2.7.

**4.** Polypropylene film according to one or more of claims 1 to 3, characterised in that it has a cover layer of $\alpha$-olefinic polymers on at least one side, preferably on both sides.

**5.** Polypropylene film according to one or more of claims 1 to 4, characterised in that an intermediate layer or intermediate layers of $\alpha$-olefinic polymers on one or both sides is/are arranged between the base layer and the cover layer or cover layers.

**6.** Polypropylene film according to one or more of claims 1 to 5, characterised in that the base layer comprises antistatic agent.

**7.** Polypropylene film according to one or more of claims 1 to 6, characterised in that the base and or cover layer(s) and/or intermediate layer(s) comprise neutralising agent and/or stabiliser.

**8.** Polypropylene film according to one or more of claims 1 to 7, characterised in that the cover layer(s) comprise lubricant and/or antiblocking agent.

**9.** Polypropylene film according to one or more of claims 1 to 8, characterised in that the intermediate layer(s) comprise neutralising agent, stabiliser, antistatic agents and/or antiblocking agent.

**10.** Polypropylene film according to one or more of claims 1 to 9, wherein the cover layer(s) is/are sealable.

**11.** Polypropylene film according to one or more of claims 1 to 10, wherein the cover layer(s) is/are not sealable.

**12.** Polypropylene film according to one or more of claims 1 to 11, characterised in that the thickness of the film is from 4 to 100 $\mu$m, the base layer accounting for about from 40 to 60% of the total thickness.

**13.** Polypropylene film according to one or more of claims 1 to 12, characterised in that it is single-layer.

**14.** Process for the production of a polypropylene film according to claim 1, characterised in that the polymers of the individual layers are heated, compressed and melted in an extruder, the melts corresponding to the individual layers of the film are extruded together simultaneously through a slot die, and the resulting film is drawn off onto a draw-off roll, during which the film cools and solidifies, the resulting prefilm being oriented longitudinally and transversely, the orientation in the longitudinal direction being effected with a longitudinal stretching ratio of from 5:1 to 9:1 and the orientation in the transverse direction being effected with a transverse stretching ratio of from 4:1 to 12:1.

15. Use of the polypropylene film according to one or more of claims 1 to 13 as a packaging film.

16. Use of the polypropylene film according to one or more of claims 1 to 13 as a laminating film.

**Revendications**

1. Feuille de polypropylène ayant subi une orientation biaxe, qui présente au moins une couche de base qui contient du polypropylène, caractérisée en ce que

   - la longueur de séquence isotactique moyenne de la molécule de polypropylène entre deux défauts de structure de la chaîne dans la moyenne statistique est supérieure à 40,
   - la fraction du polypropylène insoluble dans du n-heptane présente un indice d'isotaxie de chaîne mesuré par spectroscopie $^{13}C$-RMN s'élevant à au moins 95%,
   - le rapport de la moyenne en poids $M_w$ à la moyenne en nombre $M_n$ de la distribution du poids moléculaire est inférieur à 4,
   - la fraction du polypropylène soluble dans du n-heptane est inférieure à 1%, et
   - le retrait de la feuille en direction longitudinale et en direction transversale est inférieur à 5%.

2. Feuille de polypropylène selon la revendication 1, caractérisée en ce que la couche de base contient un polypropylène dont la fraction insoluble dans du n-heptane présente un indice d'isotaxie de chaîne mesuré par spectroscopie $^{13}C$-RMN d'au moins 96%, de préférence d'au moins 97%.

3. Feuille de polypropylène selon une ou plusieurs des revendications 1 à 2, caractérisée en ce que la couche de base contient un polypropylène dont le rapport $M_w/M_n$ est inférieur à 3,0, de préférence inférieur à 2,7.

4. Feuille de polypropylène selon une ou plusieurs des revendications 1 à 3, caractérisée en ce qu'elle présente, au moins sur une face, de préférence sur les deux faces, une couche de recouvrement constituée par des polymères $\alpha$-oléfiniques.

5. Feuille de polypropylène selon une ou plusieurs des revendications 1 à 4, caractérisée en ce qu'une ou plusieurs couches intermédiaires unilatérales ou bilatérales constituée(s) par des polymères $\alpha$-oléfiniques est ou sont appliquées entre la couche de base et la ou les couches de recouvrement.

6. Feuille de polypropylène selon une ou plusieurs des revendications 1 à 5, caractérisée en ce que la couche de base contient un agent antistatique.

7. Feuille de polypropylène selon une ou plusieurs des revendications 1 à 6, caractérisée en ce que la couche de base et/ou la ou les couches de recouvrement et/ou la ou les couches intermédiaires contient ou contiennent des agents de neutralisation et/ou des stabilisateurs.

8. Feuille de polypropylène selon une ou plusieurs des revendications 1 à 7, caractérisée en ce que la ou les couches de recouvrement contient ou contiennent des agents de glissement et/ou des agents s'opposant à l'adhérence de contact entre feuilles.

9. Feuille de polypropylène selon une ou plusieurs des revendications 1 à 8, caractérisée en ce que la ou les couches intermédiaires contient ou contiennent des agents de neutralisation, des stabilisateurs, des agents antistatiques et/ou des agents s'opposant à l'adhérence de contact entre feuilles.

10. Feuille de polypropylène selon une ou plusieurs des revendications 1 à 9, caractérisée en ce que la ou les couches de recouvrement est ou sont thermosoudables.

11. Feuille de polypropylène selon une ou plusieurs des revendications 1 à 10, caractérisée en ce que la ou les couches de recouvrement n'est pas ou ne sont pas thermosoudables.

12. Feuille de polypropylène selon une ou plusieurs des revendications 1 à 11, caractérisée en ce que l'épaisseur de la feuille s'élève de 4 à 100 µm, la couche de base représentant d'environ 40 à 60% de l'épaisseur totale.

**13.** Feuille de polypropylène selon une ou plusieurs des revendications 1 à 12, caractérisée en ce qu'elle comprend une seule couche.

**14.** Procédé pour la fabrication d'une feuille de polypropylène selon la revendication 1, caractérisé en ce qu'on chauffe les polymères des couches individuelles dans une extrudeuse, on les comprime et on les porte à fusion, on extrude les masses fondues correspondant aux couches individuelles de la feuille, de manière conjointe et de manière simultanée à travers une filière pour feuilles et on tend la feuille ainsi obtenue sur un rouleau tendeur, si bien qu'elle se refroidit et qu'elle durcit, et on soumet la feuille préliminaire ainsi obtenue à une orientation en direction longitudinale et en direction transversale, l'orientation en direction longitudinale étant réalisée avec un rapport d'étirage en direction longitudinale de 5:1 à 9:1 et en direction transversale avec un rapport d'étirage en direction transversale de 4:1 à 12:1.

**15.** Utilisation de la feuille de polypropylène selon une ou plusieurs des revendications 1 à 13 à titre de feuille d'emballage.

**16.** Utilisation de la feuille de polypropylène selon une ou plusieurs des revendications 1 à 13 à titre de feuille de contrecollage.